(19) Europäisches Patentamt
European Patent Office
Office européen des brevets

(11) **EP 3 044 066 B1**

(12) **EUROPÄISCHE PATENTSCHRIFT**

(45) Veröffentlichungstag und Bekanntmachung des Hinweises auf die Patenterteilung:
**18.09.2019 Patentblatt 2019/38**

(21) Anmeldenummer: **14767001.2**

(22) Anmeldetag: **18.09.2014**

(51) Int Cl.:
***B61D 27/00*** *(2006.01)* ***B61D 17/12*** *(2006.01)*

(86) Internationale Anmeldenummer:
**PCT/EP2014/069872**

(87) Internationale Veröffentlichungsnummer:
**WO 2015/067399 (14.05.2015 Gazette 2015/19)**

(54) **LUFTKANAL**

AIR CHANNEL

CONDUIT D'AIR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.11.2013 DE 102013222652**

(43) Veröffentlichungstag der Anmeldung:
**20.07.2016 Patentblatt 2016/29**

(73) Patentinhaber: **Siemens Mobility GmbH 81739 München (DE)**

(72) Erfinder: **HILDEBRANDT, Alexander 44789 Bochum (DE)**

(56) Entgegenhaltungen:
**DE-U1- 8 912 822     US-A- 2 059 715
US-A- 2 155 632     US-A- 2 172 944
US-A- 2 329 102**

**Beschreibung**

Die Erfindung bezieht sich auf einen Luftkanal mit zumindest einer Anschlussstelle zum Einspeisen oder Ansaugen von Luft und mit einer Vielzahl an Löchern, durch die an der zumindest einen Anschlussstelle eingespeiste Luft den Luftkanal nach außen verlässt oder angesaugte Luft in den Luftkanal eindringt, nach dem Oberbegriff von Anspruch 1.

Ein solcher Luftkanal ist beispielsweise von der US 2 172 944 A oder der US 2 329 1032 A bekannt.

Derartige Luftkanäle werden bekannterweise im Bereich der Schienenfahrzeugtechnik eingesetzt, um den Fahrgastinnenraum von Schienenfahrzeugen zu belüften. Auch können derartige Luftkanäle zum Ansaugen von Luft dienen, wenn an der Anschlussstelle ein Unterdruck erzeugt wird.

Der Erfindung liegt die Aufgabe zugrunde, einen Luftkanal der beschriebenen Art dahingehend zu verbessern, dass dieser auch im Falle einer sehr großen Länge eine zumindest annähernd gleiche Verteilung des Luftvolumenstroms durch seine Löcher sicherstellt.

Diese Aufgabe wird erfindungsgemäß durch einen Luftkanal mit den Merkmalen gemäß Patentanspruch 1 gelöst. Vorteilhafte Ausgestaltungen des erfindungsgemäßen Luftkanals sind in Unteransprüchen angegeben.

Danach ist erfindungsgemäß vorgesehen, dass die Ebene, in der die Öffnungen (60) der Trenneinrichtung (30) liegen, quer zu derjenigen Ebene angeordnet ist, in der die Löcher (80) des Luftkanals (10) liegen.

Ein wesentlicher Vorteil des erfindungsgemäßen Luftkanals ist darin zu sehen, dass dieser aufgrund der erfindungsgemäß vorgesehenen Trenneinrichtung bzw. die erfindungsgemäß vorgesehene Segmentierung des Inneren des Luftkanals in einen inneren Kanalabschnitt und einen äußeren Kanalabschnitt eine besonders gleichmäßige Verteilung der Luftgeschwindigkeit und der Druckverhältnisse über der Längsrichtung des Luftkanals zeigt. Ein signifikanter Druck- und Luftgeschwindigkeitsabfall in Längsrichtung des Luftkanals lässt sich mit der erfindungsgemäß vorgesehenen Segmentierung in vorteilhafter Weise vermeiden; zumindest wird ein verbleibender Druck- bzw. Geschwindigkeitsabfall deutlich geringer sein als bei vorbekannten Luftkanälen, bei denen die erfindungsgemäß vorgesehene Trenneinrichtung schlicht fehlt. Eine störende Geräuschbildung durch den Luftstrom lässt sich durch die beschriebene Vergleichmäßigung der Strömungs- und Druckverhältnisse in vorteilhafter Weise ebenfalls reduzieren.

Mit Blick auf eine Vergleichmäßigung des Luftstromes über der Kanallänge wird es als vorteilhaft angesehen, wenn die Trenneinrichtung - während eines Luftflusses durch den Luftkanal - einen Druckunterschied zwischen dem inneren Kanalabschnitt und dem äußeren Kanalabschnitt hervorruft.

Für ein optimales strömungstechnisches Verhalten des Luftkanals, insbesondere mit Blick auf einen möglichst gleichmäßigen Luftstrom durch die Löcher des Luftkanals, wird es als vorteilhaft angesehen, wenn der Druckverlustbeiwert der Mehrzahl an Öffnungen mindestens zweimal so groß wie der Druckverlustbeiwert der Vielzahl an Löchern ist.

_Es erfolgt eine Umlenkung des Luftstroms von der Anschlussstelle zu den Löchern bzw. umgekehrt von den Löchern zu der Anschlussstelle, um quer verlaufende Strömungskomponenten zu erzeugen; demgemäß ist vorgesehen, dass die Ebene, in der die Öffnungen der Trenneinrichtung liegen, quer zu derjenigen Ebene angeordnet ist, in der die Löcher des Luftkanals liegen.

Mit Blick auf das angesprochene Umlenken des Luftstromes ist bei einer besonders bevorzugten Ausgestaltung des Luftkanals vorgesehen, dass der Luftkanal eine Kanalwand aufweist, in der die Löcher ausgebildet sind, die Trenneinrichtung eine Seitenwand aufweist, in der die Öffnungen ausgebildet sind, die Seitenwand quer, insbesondere senkrecht, zur Kanalwand angeordnet ist und der Luftstrom im Luftkanal zumindest zweimal umgelenkt wird, nämlich zumindest einmal auf der sich zwischen der Anschlussstelle und den Öffnungen erstreckenden und im äußeren Kanalabschnitt befindlichen Teilstrecke und zumindest einmal auf der sich zwischen den Öffnungen und den Löchern erstreckenden und im inneren Kanalabschnitt befindlichen Teilstrecke.

Vorzugsweise wird der Luftstrom auf der im äußeren Kanalabschnitt befindlichen Teilstrecke und auf der im inneren Kanalabschnitt befindlichen Teilstrecke jeweils um mindestens 90 Grad umgelenkt.

Um die bereits angesprochene Segmentierung des Luftkanals durch die Trenneinrichtung besonders einfach zu erreichen, wird es als vorteilhaft angesehen, wenn die Trenneinrichtung mit einem im Querschnitt konkaven Oberflächenabschnitt auf einer Kanalwand des Luftkanals aufliegt und der konkave Oberflächenabschnitt durch die Kanalwand unter Bildung des inneren Abschnitts des Luftkanals verschlossen ist.

Vorzugsweise ist die Trenneinrichtung durch ein Strangpressprofilelement gebildet, dessen Strangpressrichtung sich entlang der Längsrichtung des Luftkanals erstreckt.

Bezüglich der Formgestaltung der Trenneinrichtung ist es vorteilhaft, wenn die Trenneinrichtung durch ein im Querschnitt U-förmiges Element oder zumindest abschnittsweise im Querschnitt U-förmiges Element gebildet ist, dessen Längsrichtung sich entlang der Längsrichtung des Luftkanals erstreckt und das die Löcher in seinem Profilinneren einschließt.

Bevorzugt weist das U-förmige Element zwei Seitenwandabschnitte auf; in diesem Falle sind die Öffnungen vorzugsweise in einem oder in beiden Seitenwandabschnitten angeordnet.

Um sicherzustellen, dass der Luftstrom die Öffnungen in der Trenneinrichtung passieren muss, wird es als vorteilhaft angesehen, wenn die Trenneinrichtung stirnseitig, also an beiden Stirnseiten oder zumindest an einer ihrer Stirnseiten, verschlossen ist.

Darüber hinaus ist es vorteilhaft, wenn die Trenneinrichtung ein oder mehrere Klappelemente aufweist, mit denen die Öffnungen oder zumindest einige der Öffnungen vollständig oder zumindest zum Teil verschließbar sind und/oder der Luftstrom im Bereich der Öffnungen durch Klappenverstellung umlenkbar ist. Eine solche Ausgestaltung des Luftkanals ermöglicht es in einfacher Weise, eine nachträgliche Optimierung des Strömungsverhaltens des Luftkanals vorzunehmen, indem das oder die Klappelemente individuell derart eingestellt werden, bis das vorgegebene Strömungsverhalten tatsächlich erzielt wird. Die Klappelemente können manuell oder über Aktuatoren einstellbar sein, die ferngesteuert, beispielsweise im Rahmen eines Steuer- oder Regelverfahrens, mit Blick auf das jeweils aktuell gewünschte Strömungsverhalten des Luftkanals optimiert eingestellt werden, beispielsweise mittels eines computergestützten Steuer- oder Reglungsverfahren. Mit den erwähnten Klappelementen ist es beispielsweise möglich, im Nachhinein Effekte wie den dynamischen Rückgewinn am Kanalende des Luftkanals auszugleichen.

Die Erfindung bezieht sich darüber hinaus auf ein Schienenfahrzeug mit einem Luftkanal, wie er oben beschrieben worden ist.

Bezüglich der Vorteile des erfindungsgemäßen Schienenfahrzeugs sei auf die obigen Ausführungen verwiesen.

Als vorteilhaft wird es angesehen, wenn die Längsrichtung des Luftkanals parallel zur Längsrichtung des Schienenfahrzeugs verläuft.

Die Erfindung wird nachfolgend anhand von Ausführungsbeispielen näher erläutert; dabei zeigen beispielhaft:

Figur 1 ein Ausführungsbeispiel für einen erfindungsgemäßen Luftkanal in einem seitlichen Querschnitt,

Figur 2 den Luftkanal gemäß Figur 1 in einer dreidimensionalen aufgeschnittenen Darstellung schräg von der Seite und

Figur 3 ein Ausführungsbeispiel für ein erfindungsgemäßes Schienenfahrzeug, das mit dem Luftkanal gemäß den Figuren 1 und 2 ausgestattet ist.

In den Figuren werden der Übersicht halber für identische oder vergleichbare Komponenten stets dieselben Bezugszeichen verwendet.

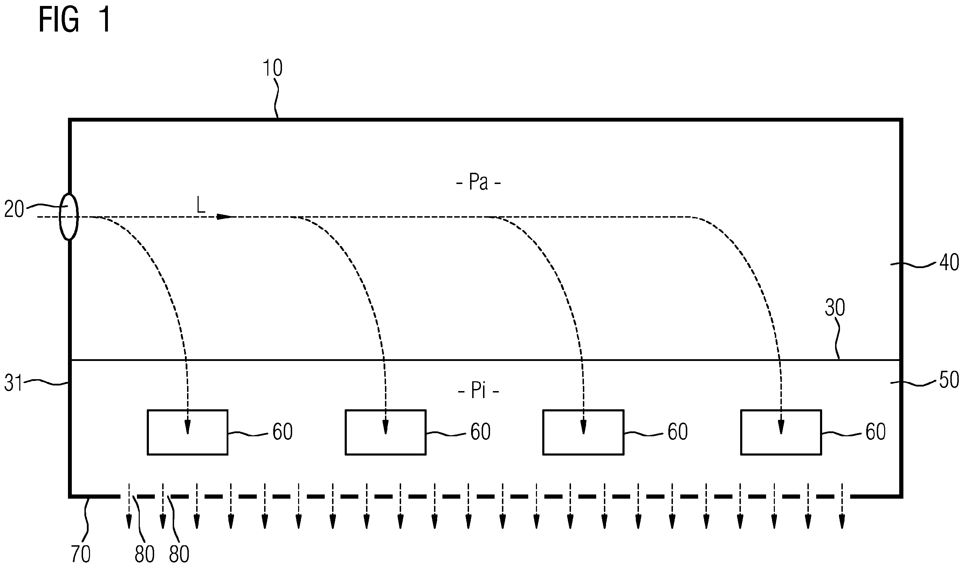

Die Figur 1 zeigt einen Luftkanal 10, der mit einer Anschlussstelle 20 ausgestattet ist. Die Anschlussstelle 20 dient zum Einspeisen von Luft in den Luftkanal 10 oder zum Ansaugen von Luft aus dem Luftkanal 10 heraus. Nachfolgend wird beispielhaft davon ausgegangen, dass die Anschlussstelle 20 zum Einspeisen von Luft genutzt wird und ein Luftstrom L von außen durch die Anschlussstelle 20 in den Luftkanal 10 hinein eingespeist wird.

Der Luftkanal 10 ist mit einer Trenneinrichtung 30 ausgestattet, die den Luftkanal 10 in einen äußeren Kanalabschnitt 40 und einen inneren Kanalabschnitt 50 unterteilt. Eine strömungstechnische Verbindung zwischen dem äußeren Kanalabschnitt 40 und dem inneren Kanalabschnitt 50 wird durch Öffnungen 60 gewährleistet, die in der Trenneinrichtung 30 vorgesehen sind.

Der Luftkanal 10 umfasst eine Kanalwand 70, die den Luftkanal 10 bei der Darstellung gemäß Figur 1 nach unten abschließt. Die Kanalwand 70 ist mit Löchern 80 versehen, die im Bereich des inneren Kanalabschnitts 50 liegen und somit durch die Trenneinrichtung 30 von dem äußeren Kanalabschnitt 40 und der Anschlussstelle 20 getrennt werden. Wird, wie bereits erwähnt, ein Luftstrom L an der Anschlussstelle 20 in den äußeren Kanalabschnitt 40 des Luftkanals 10 eingespeist, so muss der Luftstrom L zunächst die Öffnungen 60 in der Trenneinrichtung 30 passieren und in den inneren Kanalabschnitt 50 gelangen, bevor er durch die Löcher 80 in der Kanalwand 70 den Luftkanal 10 verlassen kann.

Die Anordnung und die Größe der Öffnungen 60 und der Löcher 80 sind derart gewählt, dass sich im Falle eines Einspeisens des Luftstroms L ein Druckunterschied zwischen dem äußeren Kanalabschnitt 40 und dem inneren Kanalabschnitt 50 ausbildet; der Druck Pa im äußeren Kanalabschnitt 40 wird vorzugsweise größer sein als der Druck Pi im inneren Kanalabschnitt 50. Durch den Überdruck im äußeren Kanalabschnitt 40 wird erreicht, dass der Luftstrom L den äußeren Kanalabschnitt 40 entlang der gesamten Länge des Luftkanals 10 gleichmäßig durchfluten wird und somit auch die von der Anschlussstelle 20 aus gesehen weiter dahinter liegenden Öffnungen 60 in der Trenneinrichtung 30 erreichen wird. Mit anderen Worten wird durch die Trenneinrichtung 30 vermieden, dass aus den in der Nähe der Anschlussstelle 20 befindlichen Löchern 80 durch die hohe Luftgeschwindigkeit im Bereich der Anschlussstelle 20 und den Bernoulli-Effekt Luft angesaugt wird und nur aus den weiter dahinter liegenden Löchern 80 Luft austritt..

Um eine optimale Druckverteilung im äußeren Kanalabschnitt 40 und im inneren Kanalabschnitt 50 bzw. um zu erreichen, dass durch die Löcher 80 jeweils zumindest annähernd gleich viel Luft fließt, wird es als vorteilhaft angesehen, wenn der Druckverlustbeiwert $\zeta$o der Öffnungen 60 insgesamt mindestens zweimal so groß ist wie der Druckverlustbeiwert $\zeta$1 der Löcher 80; es soll also gelten:

$$\zeta o \geq 2 * \zeta 1$$

Um zu vermeiden, dass der Luftstrom L nach dem Passieren der Anschlussstelle 20 an der Stirnseite 31 der Trenneinrichtung 30 in den inneren Kanalabschnitt 50 eindringt, ohne zuvor die Öffnungen 60 zu passieren, ist die Stirnseite 31 der Trenneinrichtung 30 vorzugsweise verschlossen.

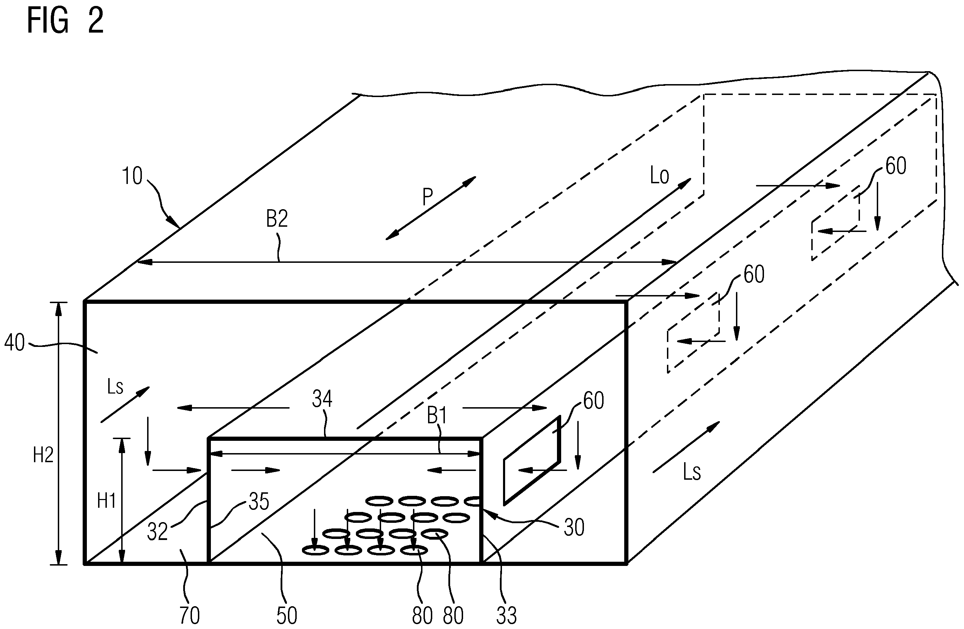

Die Figur 2 zeigt den Luftkanal 10 gemäß Figur 1 in einer dreidimensionalen Darstellung - im aufgeschnittenen Zustand - schräg von der Seite. Es lässt sich erkennen, dass die Trenneinrichtung 30 durch ein U-förmiges Element bzw. ein U-Profil gebildet ist, das zwei parallele, zumindest näherungsweise parallele, Seitenwände 32 und 33 sowie eine die beiden Seitenwände 32 und 33 verbindende Bodenwand 34 aufweist. Aufgrund ihrer U-Förmigkeit bildet die Trenneinrichtung 30 einen im Querschnitt konkaven Oberflächenabschnitt 35, der auf der Kanalwand 70 aufliegt und durch die Kanalwand 70 unter Bildung des inneren Kanalabschnitts 50 verschlossen wird. Die beiden Seitenwände 32 und 33 sowie die Bodenwand 34 trennen somit die Löcher 80 von dem äußeren Kanalabschnitt 40 des Luftkanals 10. Bei dem Ausführungsbeispiel gemäß den Figuren 1 und 2 stehen die beiden Seitenwände 32 und 33 senkrecht, zumindest näherungsweise senkrecht, auf der unteren Kanalwand 70 des Luftkanals 10, um den mit den Löchern 80 ausgestatteten Abschnitt der Kanalwand 70 zwischen sich einzuschließen, eine solche Ausgestaltung wird mit Blick auf optimale Strömungsverhältnisse als besonders vorteilhaft angesehen.

Die Trenneinrichtung 30 kann beispielsweise durch ein Strangpressprofilelement gebildet sein, dessen Strangpressrichtung sich entlang der Längsrichtung P des Luftkanals 10 erstreckt. Bei dem Ausführungsbeispiel gemäß Figur 2 sind die Öffnungen 60 in der Trenneinrichtung 30 im Bereich der beiden Seitenwände 32 und 33 angeordnet, so dass der Luftstrom L, der entlang der Längsrichtung P des Luftkanals 10 strömt, zumindest zweimal umgelenkt werden muss, bevor er die Löcher 80 in der Kanalwand 70 erreicht und den Luftkanal 10 verlassen kann. Dies soll nachfolgend näher erläutert werden:

Die Figur 2 zeigt, dass sich der Luftstrom L in drei Teilluftströme unterteilen lässt, nämlich zwei seitliche Teilluftströme Ls, die seitlich neben der Trenneinrichtung 30 vorbeifließen, sowie einen oberen Teilluftstrom Lo, der oberhalb der Bodenwand 34 fließt.

Bezüglich der beiden seitlichen Teilluftströme Ls ist festzustellen, dass diese zumindest einmal um ca. 90° umgelenkt werden müssen, um von dem äußeren Kanalabschnitt 40 in den inneren Kanalabschnitt 50 zu gelangen. Innerhalb des inneren Kanalabschnitts 50 erfolgt ein weiteres Umlenken um ca. 90°, um ein Passieren der Löcher 80 in der Kanalwand 70 zu ermöglichen. Mit anderen Worten werden die beiden seitlichen Teilluftströme Ls also insgesamt jeweils zweimal um jeweils 90° umgelenkt, bevor sie die Löcher 80 passieren.

Bezüglich des oberen Teilluftstroms Lo lässt sich erkennen, dass dieser zunächst dreimal um ca. 90° umgelenkt werden muss, bevor er von dem äußeren Kanalabschnitt 40 in den inneren Kanalabschnitt 50 gelangt. Anschließend ist ein weiteres Umlenken um ca. 90° erforderlich, um einen Durchfluss durch die in der Kanalwand 70 vorgesehenen Löcher 80 zu ermöglichen. Zusammengefasst wird der obere Teilluftstrom Lo also um ca. 360° umgelenkt, bevor er den Luftkanal 10 verlassen kann.

Die oben angesprochenen Winkelangaben sind selbstverständlich nur beispielhaft für die in der Figur 2 dargestellte Ausführungsform zu verstehen, bei der die Seitenwände 32 und 33 senkrecht auf der Kanalwand 70 stehen. Im Falle einer anderen Ausgestaltung der Trenneinrichtung 30 bzw. im Falle einer anderen Ausrichtung der Seitenwände 32 und 33 würden sich andere Winkelkonstellationen ergeben. Für die Funktionsweise des Luftkanals 10 gemäß den Figuren 1 und 2 ist lediglich von Bedeutung, dass es durch die Trenneinrichtung 30 zu einer Unterteilung des Luftkanals 10 sowie einer besonders gleichmäßigen Verteilung des Luftstroms durch die Löcher 80 - entlang der Längsrichtung P des Luftkanals 10 gesehen - kommt.

Bezüglich der Dimensionierung des Luftkanals 10 wird es als vorteilhaft angesehen, wenn die Trenneinrichtung 30 mittig im Luftkanal 10 angeordnet ist und folgende Parameter eingehalten werden:

$$0,4 * B2 \leq B1 \leq 0,6 * B2$$

$$H1 \leq H2/3,$$

wobei B1 die Breite der Trenneinrichtung 30, H1 die Höhe der Trenneinrichtung 30, B2 die Breite des Luftkanals 10 und H2 die Höhe des Luftkanals 10 bezeichnen.

Vorzugweise weist die Trenneinrichtung 30 an ihren Öffnungen 60 jeweils ein Klappelement auf, das die zugeordnete Öffnung 60 vollständig oder zumindest zum Teil verschließen kann und/oder den Luftstrom im Bereich der zugeordneten Öffnung 60 durch Klappenverstellung umlenken kann. Derartige Klappelemente sind aus Gründen der Übersicht in den Figuren 1 und 2 nicht gezeigt. Die Klappelemente ermöglichen es in einfacher Weise, eine nachträgliche Optimierung des Luftstromes im Luftkanal 10 vorzunehmen, bis ein vorgegebenes Strömungsverhalten erzielt wird. Die Klappelemente werden vorzugsweise individuell eingestellt, sei es manuell oder über Aktuatoren.

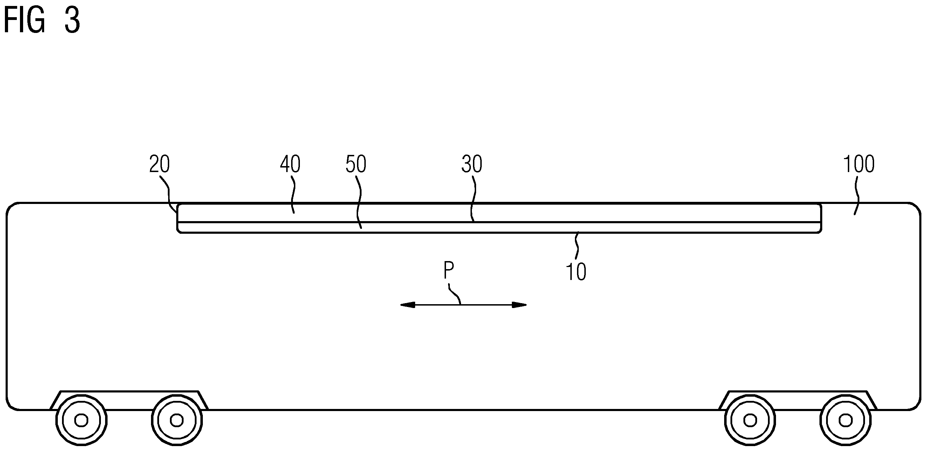

Die Figur 3 zeigt ein Ausführungsbeispiel für ein Schienenfahrzeug 100, das mit dem Luftkanal 10 gemäß den Figuren 1 und 2 ausgestattet ist. Der Luftkanal 10 dient zum Belüften bzw. Klimatisieren des Innenraums des Schienenfahrzeugs 100.

Es lässt sich erkennen, dass die Längsrichtung P des Luftkanals 10 parallel zur Längsrichtung des Schienenfahrzeugs 100 liegt. Die Figur 3 zeigt von dem Luftkanal 10 darüber hinaus die Anschlussstelle 20, die Trenneinrichtung 30 sowie die beiden durch die Trenneinrichtung 30 gebildeten Kanalabschnitte 40 und 50 des Luftkanals.

Aufgrund der im Zusammenhang mit den Figuren 1 und 2 im Detail beschriebenen Funktionen der Trenneinrichtung 30 wird es im Falle eines Einspeisens eines Luftstroms an der Anschlussstelle 20 zu einer entlang der Längsrichtung P gesehen gleich verteilten Luftströmung durch die Löcher in der unteren Kanalwand 70 des Luftkanals 10 sowie zu einer gleichmäßigen Belüftung und Klimatisierung des Innenraums des Schienenfahrzeugs 100 kommen.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1.  Luftkanal (10)

    - mit zumindest einer Anschlussstelle (20) zum Einspeisen oder Ansaugen von Luft und
    - mit einer Vielzahl an Löchern (80), durch die an der zumindest einen Anschlussstelle (20) eingespeiste Luft den Luftkanal (10) nach außen verlässt oder angesaugte Luft in den Luftkanal (10) eindringt, wobei
    - im Inneren des Luftkanals (10) eine Trenneinrichtung (30) angeordnet ist, die sich längs der Längsrichtung des Luftkanals (10) erstreckt und das Innere des Luftkanals (10) in einen inneren Kanalabschnitt (50) und einen äußeren Kanalabschnitt (40) unterteilt, wobei die Löcher (80) des Luftkanals (10) im inneren Kanalabschnitt (50) liegen und die Anschlussstelle (20) im äußeren Kanalabschnitt (40) liegt, und
    - die Trenneinrichtung (30) eine Mehrzahl an Öffnungen (60) aufweist, die in Längsrichtung des Luftkanals (10) gesehen beabstandet zueinander angeordnet sind und jeweils einen Luftstrom (L) zwischen dem inneren Kanalabschnitt (50) und dem äußeren Kanalabschnitt (40) ermöglichen

    **dadurch gekennzeichnet, dass**
    die Ebene, in der die Öffnungen (60) der Trenneinrichtung (30) liegen, quer zu derjenigen Ebene angeordnet ist, in der die Löcher (80) des Luftkanals (10) liegen.

2.  Luftkanal (10) nach Anspruch 1,
    **dadurch gekennzeichnet, dass**
    die Trenneinrichtung (30) während eines Luftstromes (L) durch den Luftkanal (10) einen Druckunterschied zwischen dem inneren Kanalabschnitt (50) und dem äußeren Kanalabschnitt (40) hervorruft.

3.  Luftkanal (10) nach einem der voranstehenden Ansprüche,
    **dadurch gekennzeichnet, dass**
    der Druckverlustbeiwert der Mehrzahl an Öffnungen (60) mindestens zweimal so groß wie der Druckverlustbeiwert der Vielzahl an Löchern (80) ist.

4.  Luftkanal (10) nach einem der voranstehenden Ansprüche,
    **dadurch gekennzeichnet, dass**

    - die Trenneinrichtung (30) mit einem im Querschnitt konkaven Oberflächenabschnitt (35) auf einer Kanalwand (70) des Luftkanals (10) aufliegt und
    - der konkave Oberflächenabschnitt (35) durch die Kanalwand (70) unter Bildung des inneren Kanalabschnitts (50) des Luftkanals (10) verschlossen ist.

5.  Luftkanal (10) nach einem der voranstehenden Ansprüche,
    **dadurch gekennzeichnet, dass**

    - der Luftkanal (10) eine Kanalwand (70) aufweist, in der die Löcher (80) ausgebildet sind,
    - die Trenneinrichtung (30) eine Seitenwand (32, 33) aufweist, in der die Öffnungen (60) ausgebildet sind,
    - die Seitenwand (32, 33) quer, insbesondere senkrecht, zur Kanalwand (70) angeordnet ist und
    - der Luftstrom im Luftkanal (10) zumindest zweimal umgelenkt wird, nämlich zumindest einmal auf der sich zwischen der Anschlussstelle (20) und den Öffnungen (60) erstreckenden und im äußeren Kanalabschnitt (40) befindlichen Teilstrecke und zumindest einmal auf der sich zwischen den Öffnungen (60) und den Löchern (80) erstreckenden und im inneren Kanalabschnitt (50) befindlichen Teilstrecke.

6.  Luftkanal (10) nach Anspruch 5,
    **dadurch gekennzeichnet, dass**
    der Luftstrom (L) auf der im äußeren Kanalabschnitt (40) befindlichen Teilstrecke und auf der im inneren Kanalabschnitt (50) befindlichen Teilstrecke jeweils um mindestens 90 Grad umgelenkt wird.

7.  Luftkanal (10) nach einem der voranstehenden Ansprüche,
    **dadurch gekennzeichnet, dass**
    die Trenneinrichtung (30) durch ein Strangpressprofilelement gebildet ist, dessen Strangpressrichtung sich entlang der Längsrichtung (P) des Luftkanals (10) erstreckt.

8.  Luftkanal (10) nach einem der voranstehenden Ansprüche,
**dadurch gekennzeichnet, dass**
die Trenneinrichtung (30) durch ein im Querschnitt U-förmiges Element oder zumindest abschnittsweise im Querschnitt U-förmiges Element gebildet ist, dessen Längsrichtung sich entlang der Längsrichtung (P) des Luftkanals (10) erstreckt und das die Löcher (80) in seinem Profilinneren einschließt.

9.   Luftkanal (10) nach Anspruch 8,
**dadurch gekennzeichnet, dass**
das U-förmige Element zwei Seitenwände (32, 33) aufweist und die Öffnungen (60) in einem oder in beiden Seitenwänden angeordnet sind.

10.  Luftkanal (10) nach einem der voranstehenden Ansprüche,
**dadurch gekennzeichnet, dass**

    - die Anschlussstelle (20) an einem Ende des Luftkanals (10) angeordnet ist und
    - die Trenneinrichtung (30) an ihrer der Anschlussstelle (20) zugewandten Stirnseite verschlossen ist.

11.  Luftkanal (10) nach einem der voranstehenden Ansprüche,
**dadurch gekennzeichnet, dass**
die Trenneinrichtung (30) ein oder mehrere Klappelemente aufweist, mit denen die Öffnungen (60) oder zumindest einige der Öffnungen (60) vollständig oder zumindest zum Teil verschließbar sind.

12.  Schienenfahrzeug (100) mit einem Luftkanal (10) nach einem der voranstehenden Ansprüche.

13.  Schienenfahrzeug (100) nach Anspruch 12,
**dadurch gekennzeichnet, dass**
die Längsrichtung des Luftkanals (10) parallel zur Längsrichtung des Schienenfahrzeugs (100) verläuft.

**Claims**

1.   Air duct (10)

    - having at least one connection point (20) for the feedingin or intake of air, and
    - having a multiplicity of holes (80) through which air fed in at the at least one connection point (20) exits the air duct (10) towards the outside or air taken in there enters the air duct (10), wherein,
    - in the interior of the air duct (10), there is arranged a separating device (30) which extends along the longitudinal direction of the air duct (10) and subdivides the interior of the air duct (10) into an inner duct section (50) and an outer duct section (40), wherein the holes (80) of the air duct (10) are situated in the inner duct section (50) and the connection point (20) is situated in the outer duct section (40), and
    - the separating device (30) has a plurality of openings (60) which, as viewed in the longitudinal direction of the air duct (10), are arranged spaced apart from one another and each allow an air flow (L) between the inner duct section (50) and the outer duct section (40),

**characterized in that**
the plane in which the openings (60) of the separating device (30) are situated is arranged transversely to that plane in which the holes (80) of the air duct (10) are situated.

2.   Air duct (10) according to Claim 1,
**characterized in that**
the separating device (30) brings about a pressure difference between the inner duct section (50) and the outer duct section (40) while there is an air flow (L) through the air duct (10).

3.   Air duct (10) according to either of the preceding claims,
**characterized in that**
the pressure loss coefficient of the plurality of openings (60) is at least twice as great as the pressure loss coefficient of the multiplicity of holes (80).

4.   Air duct (10) according to one of the preceding claims,
**characterized in that**

    - the separating device (30) bears with a surface section (35), which is concave in cross-section, on a duct wall (70) of the air duct (10), and
    - the concave surface section (35) is closed off by the duct wall (70), with the inner duct section (50) of the air duct (10) being formed.

5.   Air duct (10) according to one of the preceding claims,
**characterized in that**

    - the air duct (10) has a duct wall (70) in which the holes (80) are formed,
    - the separating device (30) has a side wall (32, 33) in which the openings (60) are formed,
    - the side wall (32, 33) is arranged transversely, in particular perpendicular, to the duct wall (70), and
    - the air flow in the air duct (10) is diverted at least twice, specifically at least once on the sub-path extending between the connection point (20) and the openings (60) and situated in the outer duct section (40), and at least once on the sub-path extending between the openings (60) and the holes (80) and situated in the inner duct section (50).

6. Air duct (10) according to Claim 5,
**characterized in that**,
on the sub-path situated in the outer duct section (40) and on the sub-path situated in the inner duct section (50), the air flow (L) is in each case diverted through at least 90 degrees.

7. Air duct (10) according to one of the preceding claims,
**characterized in that**
the separating device (30) is formed by an extruded profile element whose direction of extrusion extends along the longitudinal direction (P) of the air duct (10).

8. Air duct (10) according to one of the preceding claims,
**characterized in that**
the separating device (30) is formed by an element which is U-shaped in cross-section, or an element which is at least sectionally U-shaped in cross-section, whose longitudinal direction extends along the longitudinal direction (P) of the air duct (10) and which includes the holes (80) in its profile interior.

9. Air duct (10) according to Claim 8,
**characterized in that**
the U-shaped element has two side walls (32, 33), and the openings (60) are arranged in one or both side walls.

10. Air duct (10) according to one of the preceding claims,
**characterized in that**

- the connection point (20) is arranged at one end of the air duct (10), and
- the separating device (30) is closed off at the end side thereof which faces towards the connection point (20).

11. Air duct (10) according to one of the preceding claims,
**characterized in that**
the separating device (30) has one or more flap elements by way of which the openings (60) or at least some of the openings (60) are able to be closed off completely or at least partly.

12. Rail vehicle (100) having an air duct (10) according to one of the preceding claims.

13. Rail vehicle (100) according to Claim 12,
**characterized in that**
the longitudinal direction of the air duct (10) extends parallel to the longitudinal direction of the rail vehicle (100) .

**Revendications**

1. Conduit (10) pour de l'air

- comprenant au moins un point (20) de raccordement pour injecter ou aspirer de l'air et
- comprenant une pluralité de trous (80), par lesquels de l'air, injecté sur au moins un point (20) de raccordement, quitte le conduit (10) pour de l'air en allant vers l'extérieur ou de l'air aspiré pénètre dans le conduit (10) pour de l'air, dans lequel
- à l'intérieur du conduit (10) pour de l'air est disposé un dispositif (30) de séparation, qui s'étend suivant la direction en longueur du conduit (10) pour de l'air et qui subdivise l'intérieur du conduit (10) pour de l'air en une partie (50) intérieure de conduit et en une partie (40) extérieure de conduit, les trous (80) du conduit (10) pour de l'air étant dans la partie (50) intérieure du conduit et le point (20) de raccordement dans la partie (40) extérieure du conduit et
- le dispositif (30) de séparation a une pluralité d'ouvertures (60), qui, considéré dans la direction en longueur du conduit (10) pour de l'air, sont disposées à distance les unes des autres et rendent chacune possible un courant (L) d'air entre la partie (50) intérieure du conduit et la partie (40) extérieure du conduit,

**caractérisé en ce que**
le plan, dans lequel se trouvent les ouvertures (60) du dispositif (30) de séparation, est transversal au plan dans lequel se trouvent les trous (80) du conduit (10) pour de l'air.

2. Conduit (10) pour de l'air suivant la revendication 1,
**caractérisé en ce que**
le dispositif (30) de séparation provoque, pendant un courant (L) d'air dans le conduit (10) pour de l'air, une différence de pression entre la partie (50) intérieure du conduit et la partie (40) extérieure du conduit.

3. Conduit (10) pour de l'air suivant l'une des revendications précédentes,
**caractérisé en ce que**
le coefficient de perte de pression de la pluralité d'ouvertures (60) est au moins deux fois aussi grand que le coefficient de perte de pression de la pluralité de trous (80).

4. Conduit (10) pour de l'air suivant l'une des revendications précédentes,

**caractérisé en ce que**

- le dispositif (30) de séparation s'applique par une partie (35) de surface concave en section transversale à une paroi (70) du conduit (10) pour de l'air et
- la partie (35) de surface concave est fermée par la paroi (70) du conduit, avec formation de la partie (50) intérieure du conduit (10) pour de l'air.

5. Conduit (10) pour de l'air suivant l'une des revendications précédentes,
**caractérisé en ce que**

- le conduit (10) pour de l'air a une paroi (70), dans laquelle sont constitués les trous (80),
- le dispositif (30) de séparation a une paroi (32, 33) latérale, dans laquelle sont constituées les ouvertures (60),
- la paroi (32, 33) latérale est transversale, notamment perpendiculaire à la paroi (70) du conduit et
- le courant d'air dans le conduit (10) pour de l'air est dévié au moins deux fois, à savoir au moins une fois sur la sous-section s'étendant entre le point (20) de raccord et les ouvertures (60) et se trouvant dans la partie (40) extérieure du conduit, et au moins une fois sur la sous-section s'étendant entre les ouvertures (60) et les trous (80) et se trouvant dans la partie (50) intérieure du conduit.

6. Conduit (10) pour de l'air suivant la revendication 5,
**caractérisé en ce que**
le courant (L) d'air est dévié, respectivement, d'au moins 90 degrés dans la sous-section se trouvant dans la partie (40) extérieure du conduit et dans la sous-section se trouvant dans la partie (50) intérieure du conduit.

7. Conduit (10) pour de l'air suivant l'une des revendications précédentes,
**caractérisé en ce que**
le dispositif (30) de séparation est formé d'un élément profilé filé à la presse, dont la direction de filage s'étend suivant la direction (P) en longueur du conduit (10) pour de l'air.

8. Conduit (10) pour de l'air suivant l'une des revendications précédentes,
**caractérisé en ce que**
le dispositif (30) de séparation est formé d'un élément en forme de U en section transversale, dont la direction en longueur s'étend suivant la direction (P) en longueur du canal (10) pour de l'air et qui inclut les trous (80) dans son intérieur de profil.

9. Conduit (10) pour de l'air suivant la revendication 8,
**caractérisé en ce que**
l'élément en forme de U a deux parois (32, 33) latérales et les ouvertures (60) sont prévues dans l'une ou dans les deux parois latérales.

10. Conduit (10) pour de l'air suivant l'une des revendications précédentes,
**caractérisé en ce que**

- le point (20) de raccordement est disposé à un bout du conduit (10) pour de l'air et
- le dispositif (30) de séparation est fermé sur son côté frontal tourné vers le point (20) de raccordement.

11. Conduit (10) pour de l'air suivant l'une des revendications précédentes,
**caractérisé en ce que**
le dispositif (30) de séparation a un ou plusieurs éléments formant volet, par lesquels les ouvertures (60) ou au moins certaines des ouvertures (60) peuvent être fermées complètement ou au moins en partie.

12. Véhicule (100) ferroviaire ayant un conduit (10) pour de l'air suivant l'une des revendications précédentes.

13. Véhicule (100) ferroviaire suivant la revendication 12,
**caractérisé en ce que**
la direction en longueur du conduit (10) pour de l'air s'étend parallèlement à la direction en longueur du véhicule (100) ferroviaire.

# FIG 1

FIG 2

FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2172944 A
- US 23291032 A